# EUROPEAN PATENT SPECIFICATION

(11) **EP 2 488 272 B1**
(45) Date of publication and mention of the grant of the patent: **26.05.2021**
(21) Application number: 10795026.3
(22) Date of filing: 15.10.2010
(51) Int. Cl.: B01D 29/15, B01D 35/147, B01D 29/96, B01D 35/153

(54) **CAP FILTER AND USE**
KAPPEFILTER UND VERWENDUNG
FILTRE À CAPUCHON ET UTILISATION

(30) Priority: 15.10.2009 FI 20096063
(43) Date of publication of application: 22.08.2012
(73) Proprietor: Parker Hannifin Manufacturing Finland OY, 31700 Urjala (FI)
(72) Inventor: KAPANEN, Petteri, FI-33720 Tampere (FI); YLHÄINEN, Mikko, FI-37500 Lempäälä (FI); SORRI, Antti, FI-31760 Urjala (FI)
(74) Representative: Berggren Oy
(86) International application number: PCT/FI2010/050800
(87) International publication number: WO 2011/045475

(56) References cited:
- WO-A1-2010/120167
- US-A- 3 283 902
- US-A- 5 770 054

## Description

### Technical field

The invention relates to filtration technology and concerns a filter, comprising a main filter and a so-called reserve filter. When the main filter becomes clogged, a bypass valve opens in response to pressure, whereby the liquid passes only through the reserve filter. The filter can be used for example for the cleaning of lubrication oils.

### Background art

For example, when circulating lubrication oil is subjected to cleaning by filtration, the filter may become clogged, thereby disabling the progress of oil. This has led to the use of devices, which include not only a main filter but also a so-called reserve filter, and a bypass valve which opens when the pressure difference between inlet side and outlet side increases to a sufficient magnitude. When the valve is open, the liquid passes only through the reserve filter. Prior known are both the type of filters in which the liquid passes only through a reserve filter when the valve is open, and those in which the liquid passes through a reserve filter also when the valve is closed. In the former solution, the total pressure loss inflicted by the system is lesser. A weakness is that, if the material of the main filter breaks up, unfiltered liquid will be allowed through. In the latter solution, the filtration works even if the main filter should break up. However, the pressure loss will be higher with an additional possibility of the reserve filter also becoming clogged more quickly by unfiltered liquid that has passed through the bypass valve.

Publication WO 2004/054684 discloses a filter, comprising a cylindrical main filtering element and a protection screen coaxially placed inside the same. In the event of clogging, a bypass valve opens and the liquid is allowed to flow to the inside of the protection screen and from there outward through the protection screen.

Publication US 3,283,902 discloses a filter in accordance with the preamble of claim 1.

### General description of the invention

Now, in accordance with the independent claims 1 and 2, a filter provided with a bypass valve and its use has been invented.

The filter comprises coaxially a main filtering element and a reserve filtering element, and a closure means which, in a closed condition, blocks the flow of liquid to be filtered past the main filter and, in an open condition, allows the flow of liquid past the main filter to the reserve filter. The closure means is spring-operated, such that, when the pressure difference across the main filter exceeds a given value, the spring gives in for opening the closure means. Thus, the filter is provided with a bypass valve. When the main filter becomes clogged or the flow therethrough is otherwise blocked, for example due to an excessively high liquid viscosity, the filter is nevertheless able to carry on its operation. The filter may be provided with a detector for signaling the opening of the closure means. The reserve filtering element has a filtration resistance which is lesser than that of the main filtering element.

The filter element may be provided with a support member, especially a support tube. The support member may also be an integral part of the filter body, in which case, therefore, there is no need to replace it as the filter element is replaced. The filter includes a removable cap, which, when in a closed condition, applies pressure to a spring by way of a closure means, most preferably by way of the reserve filtering element or the main filtering element. This type of bypass valve solution enables the use of a long spring and thereby better dynamics for the valve. In the solution, the spring support is also readily implementable. The valve opening pressure can be determined by the dimensions of the filtering element cap or by the spring stiffness. The bypass valve may be a part of the filter body with no need to replace it every time the filtering element is replaced.

The filter includes a central stem. It is attached to a central tube, through which the filtered liquid is discharged. The spring is fitted around the stem. The cap is attached to the central stem. Here, a fastening peg is used between these elements.

The filter body and filtering elements are in the shape of a circular cylinder. The reserve filtering element is positioned inside the main filtering element, the liquid to be filtered being received on the outside of the main filtering element. The reserve filtering element is shorter than the main filtering element.

The closure means is a cup-shaped piston. Thereby, in a closed position, it has its top rim against an overhead lid present at the end of the filter element. The piston has its interior sealed against the central stem or the cap fastening means.

The main filtering element and the reserve filtering element are integrated for a single filter element. The elements may be interconnected at one end thereof by means of a leak-proof lid, which precludes the flow of liquid into a space between the elements.

The filter may be constructed for example in such a way that the unit's filtering block has a connection, along with its flow conduits, pre-machined thereon for the filter. The block may comprise a number of filters.

According to the invention, the body comprises a single pair of main filtering element -reserve filtering element. However, another useful design is such that the body comprises several pairs of elements, each provided with its own removable cap.

The invention is particularly applicable for the cleaning of lubrication oils. The applications include for example filtration of circulating oils in engines and generators, as well as the circulating lubrication oil in paper making machines.

### Drawings

The attached drawings constitute a part of the written description of the invention and relate to the following detailed description of some embodiments of the invention.

In the drawings,
fig. 1 shows one filter of the invention in a sectional side view,
fig. 2 shows another filter of the invention in a sectional side view,
fig. 3 shows a filtering element for the filters of figs. 1 and 2 in an enlarged plan view, and
fig. 4 shows a section of fig. 3.

### Detailed description of some embodiments of the invention

The filters according to the invention comprise a body 1 in the shape of a circular cylinder with a bottom 2 at its lower end and a removable cap 3 at its upper end.

The bottom 2 has on its side an inlet connection for the liquid to be filtered. In the middle is a pedestal with a recess therein. In the recess is fitted an axially directed hollow central tube 4. The recess has at its bottom an outlet for the filtered liquid. The central tube extends into the interior of the filter, more or less midway through it. The central tube has openings 5 in its shell along a length located inside the filter. Around the central tube is fitted a sleeve 6, whose top end extends to some extent above the central tube's top end. Between the sleeve's lower end and the bottom, around the central tube, is fitted a bottom spring 7 urging the sleeve upward. The sleeve shell has openings 8 matching the central tube's openings. When the filter is in operation, the openings are in register with each other, the liquid being able to flow through the sleeve into the central tube.

On a top end of the central tube 4 is mounted a stem 9 with its bottom end inside the tube. The stem includes a wider shoulder portion against the tube's top end, and a narrower shaft portion upward thereof. The shaft portion provides a spanner gap for installation. On the shaft portion is fitted a cup-shaped piston 10 with its bottom facing downward. Between the piston and the stem's shoulder portion, around the stem, is fitted a piston spring 11 striving to urge the piston to a high position. The stem has its end fitted with a fastening peg 12, such that its lower end is spaced from the piston's bottom. Thereby, a bypass valve, including the piston and the piston spring, is provided with a bias tension for facilitating a replacement of the filtering elements. The piston body is provided with holes 13 leading to this gap for equalizing a pressure difference between the piston faces. The fastening peg has its lower part sealed against the internal piston face. The fastening peg has its upper end extending above the body 1. The cap 3 is fixed by threading to the end of the fastening peg and sealed on the peg. The cap has a skirt sealed against an external surface of the body 1, and a hole in the middle in which the fastening peg is fitted and sealed. On top of the cap is a grip member 14. The grip member carries a screw thread and is in attachment with the cap by way of a retaining ring. Between the grip and the cap is a special slip ring. The cap is further provided with closable holes 15. These can be fitted with various sensors, venting cocks and the like.

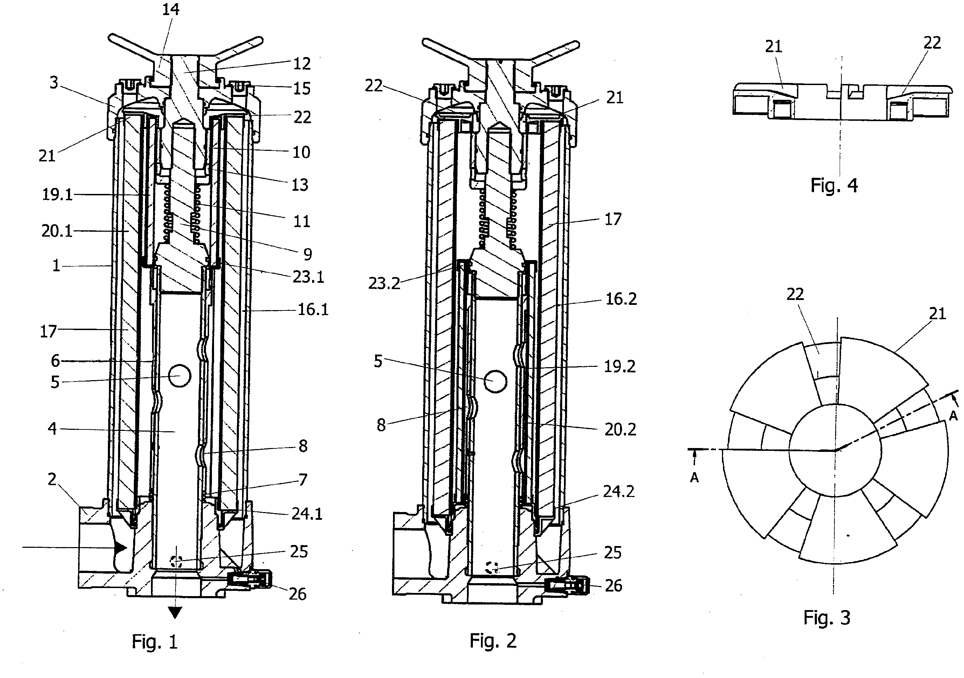

The filter of fig. 1 comprises a filtering element 16.1. Spaced from the outer shell 1, it has a cylindrical main filtering element 17. On its internal surface there is a perforated support tube 18. At the top end of the main filtering element 16, on the inside and spaced from the main filtering element, there is a reserve filtering element 19.1, which is also spaced from the piston 12. On the external surface of the reserve filtering element there is a perforated support tube 20.1. The reserve filtering element is connected at its top end to the top end of the main filtering element by way of a flange-shaped overhead lid 21. The overhead lid features at its inner edge a downward extending cylindrical protrusion, whose bottom edge responds to the outer edge of the piston's upper end. The overhead lid features at its outer edge a downward protrusion along a surface of the main filtering element. Likewise, between the filtering elements, the overhead lid has a protrusion. The overhead lid features on its top surface radial groove-like flow channels 22, which extend from outside the main filtering element to a space between the reserve filtering element and the fastening peg 12, said space having in its lower part the upper end of the piston. The flow channel tapers as it progresses inward. The outer end has a horizontal portion and the inner end has a deepening portion.

The reserve filtering element 19.1 has its bottom end reinforced with a trough-like intermediate lid 23.1. Its bottom responds to the top end of the sleeve 6 and its inner edge is sealed against the outer edge of the shoulder portion of the stem 9. The main filtering element has its bottom end provided with a trough-like bottom lid 24.1. Its inner edge has a downward protrusion, which is sealed against the outer surface of a pedestal at the bottom 2.

When, in a filter as shown in fig. 1, the filter element 16.1 has been set in its position and the cap 3 has been closed by threading, said cap lies against the overhead lid 21 of the filter element and applies pressure to the piston spring 11 by way of the overhead lid and the piston 10. At the same time, the bottom spring 7 is pressed by way of the intermediate lid 23.1 and the sleeve 6. The openings 5 of the central tube and the openings 8 of the sleeve are in alignment. The liquid to be filtered is flowing from the inlet channel of the filter into a space between the filter body 1 and the main filtering element 17. In a normal condition, the liquid is filtered through the main filtering element only, and the filtered liquid continues to flow through the openings of the sleeve and central tube into the central tube and out from its bottom end. As the flow resistance across the main filtering element increases (as a result of the filter element contamination, for example), the pressure difference between its exterior and interior naturally increases as well. When the pressure difference grows to a sufficient magnitude, the piston spring gives way and the piston moves downward, such that the liquid is able to flow by way of the flow channels 22 into an interior of the reserve filtering element. The liquid is now filtered through the reserve filtering element and discharges from between the main filtering element and the reserve filtering element as in a normal condition.

The filter of fig. 2 comprises a filter element 16.2. Spaced from an outer shell 1, it also has a main filtering element 17 with an overhead lid 21 at its top end. The main filtering element 16 has its bottom end, on the inside and spaced from the main filtering element, provided with a reserve filtering element 19.2, which is also spaced from a sleeve 6. The reserve filtering element has on its inner surface a support tube 20.2. The reserve filtering element has a flow resistance which is lesser than that of the main filtering element. The reserve filtering element has top end reinforced with a trough-like intermediate lid 23.2, whose inner edge is in a sealed relationship against an outer edge of the shoulder portion of a stem 9, and whose bottom face responds to the top end of the sleeve. The reserve filtering element has its bottom end connected with the bottom of the main filtering element end by way of a flange-shaped bottom lid 24.2, which has an annular protrusion upward along the outer surface of the main filter element, into a space between the filtering elements, and along the inner surface of the reserve filtering element. In addition, the bottom lid has a protrusion downwards and is sealed against the outer surface of a pedestal at the bottom.

In the filter of fig. 2 as well, the liquid to be filtered is flowing from the inlet channel into the space between the filter's outer shell 1 and main filtering element 17. In a normal condition, the liquid is filtered through the main filtering element, and the filtered liquid continues to flow through the reserve filtering element and the openings 8, 5 of the sleeve and central tube into the central tube and out from its bottom end. As the flow resistance across the main filtering element increases to a sufficient magnitude, the piston spring gives way and the piston moves so as to allow the liquid to flow by way of flow channels 22 into the interior of the main filtering element. The liquid is now filtered through the reserve filtering element and discharges as in a normal condition.

When the cap 3 is opened, the bottom spring 7 is released and lifts the sleeve 6 upward in such a way that the openings 5 and 8 are no longer in alignment, thus blocking the flow of unfiltered liquid into the central tube. The liquid left in the filter is discharged by way of an outlet connection 25. At the same time, the sleeve carries the filtering element 16.1 or 16.2 upward. Thus, the filtering element is easy to remove.

The bottom is further provided on its outlet side with a side connection and therein a pressure difference indicator 26, from which there is a connection also to the inlet side.

## Claims

1. A filter comprising
- a cylindrical body (1) and an inlet channel for liquid to be filtered leading into the body and an outlet channel for filtered liquid leading out of the body, wherein the body (1) includes a removable, body-closing cap (3)
- a central tube (4), through which the filtered liquid is discharged,
- in the body (1), a coaxially cylindrical main filtering element (17) supplied with the liquid to be filtered from the inlet channel, the liquid to be filtered being received on the outside of the main filtering element and a cylindrical reserve filtering element (19.1; 19.2), that is shorter than the main filtering element, is positioned inside the main filtering element and whose filtering resistance is not more than equal to that of the main filtering element (17),
- a by-pass valve including spring-operated closure means (10) and a closure means spring (11),
wherein
- the spring-operated closure means (10) has
- a closed position blocking the flow of the liquid to be filtered from bypassing the main filtering element (17) and allowing the flow of the liquid to be filtered to the main filtering element (17) and further through the main filtering element (17) and
- an open position allowing the liquid to be filtered to bypass the main filtering element (17) to the reserve filtering element (19.1; 19.2) and further to flow through the reserve filtering element (19.1; 19.2) , and wherein
- the closure means spring (11) urges the closure means (10) to the closed position and which gives way for opening the closure means (10) when the pressure difference across the main filtering element (17) exceeds a given value,
**characterized in that**
- the body-closing cap (3), when in attachment with the body (1), presses the closure means (10) against the closure means spring (11) by way of the main filtering element (17) or the reserve filtering element (19 1, 19 2),
- the main filtering element (17) and the reserve filtering element (19.1; 19.2) are integrated to form single filter element (16.1; 16.2) and interconnected at one end thereof,
- the filter element (16.1; 16.2) comprises an overhead lid (21) at its end,
- the filter further comprises a central stem (9) attached to the central tube (4), wherein the removable cap (3) is attached to the stem (9) with a fastening peg (12) between the stem (9) and the removable cap (3),
- the closure means spring (11) is a coil spring fitted around the stem (9) and
- the closure means (10) is a cup-shaped piston having its interior sealed against the central stem (9) or the fastening peg (12), the cup-shaped piston having a top rim placed against the overhead lid (21) present at the end of the filter element (16.1; 16.2) in the closed position of the closure means (10).

2. The use of the filter as set forth in claim 1 for the filtration of lubrication oil.

## Patentansprüche

1. Filter, der Folgendes aufweist:
- einen zylindrischen Körper (1) und einen in den Körper führenden Einlasskanal für zu filternde Flüssigkeit und einen aus dem Körper (1) herausführenden Auslasskanal für gefilterte Flüssigkeit, wobei der Körper (1) eine abnehmbare, den Körper verschließende Kappe (3) aufweist,
- ein Mittelrohr (4), durch das die gefilterte Flüssigkeit abgeleitet wird,
- in dem Körper (1) ein koaxial zylindrisches Hauptfilterelement (17), dem die zu filternde Flüssigkeit aus dem Einlasskanal zugeführt wird, wobei die zu filternde Flüssigkeit an der Außenseite des Hauptfilterelements aufgenommen wird und ein zylindrisches Reservefilterelement (19.1; 19.2), das kürzer als das Hauptfilterelement ist, innerhalb des Hauptfilterelements angeordnet ist und dessen Filterwiderstand höchstens gleich dem des Hauptfilterelements (17) ist,
- ein Bypass-Ventil mit einem federbetätigten Verschlussmittel (10) und einer Verschlussmittelfeder (11), wobei
- das federbetätigte Verschlussmittel (10) Folgendes aufweist:
- eine geschlossene Position, die den Strom der zu filternden Flüssigkeit daran hindert, das Hauptfilterelement (17) zu umgehen, und den Strom der zu filternden Flüssigkeit zum Hauptfilterelement (17) und weiter durch das Hauptfilterelement (17) hindurch zulässt, und
- eine offene Position, die es der zu filternden Flüssigkeit erlaubt, das Hauptfilterelement (17) zum Reservefilterelement (19.1; 19.2) zu umgehen und weiter durch das Reservefilterelement (19.1; 19.2) zu fließen, und wobei
- die Verschlussmittelfeder (11) das Verschlussmittel (10) in die geschlossene Position drückt und zum Öffnen des Verschlussmittels (10) nachgibt, wenn die Druckdifferenz am Hauptfilterelement (17) einen gegebenen Wert überschreitet,
**dadurch gekennzeichnet, dass**
- die den Körper verschließende Kappe (3), wenn sie mit dem Körper (1) verbunden ist, das Verschlussmittel (10) mithilfe des Hauptfilterelements (17) oder des Reservefilterelements (19 1, 19 2) gegen die Verschlussmittelfeder (11) drückt,
- das Hauptfilterelement (17) und das Reservefilterelement (19.1; 19.2) zu einem einzigen Filterelement (16.1; 16.2) zusammengefasst und an einem Ende miteinander verbunden sind,
- das Filterelement (16.1; 16.2) an seinem Ende einen Überkopfdeckel (21) aufweist,
- der Filter ferner einen mittigen Schaft (9) aufweist, der an dem Mittelrohr (4) befestigt ist, wobei die abnehmbare Kappe (3) an dem Schaft (9) mit einem Befestigungszapfen (12) zwischen dem Schaft (9) und der abnehmbaren Kappe (3) befestigt ist,
- die Verschlussmittelfeder (11) eine Schraubenfeder ist, die um den Schaft (9) herum angebracht ist, und
- das Verschlussmittel (10) ein becherförmiger Kolben ist, dessen Inneres gegen den mittigen Schaft (9) oder den Befestigungszapfen (12) abgedichtet ist, wobei der becherförmige Kolben einen oberen Rand aufweist, der in der geschlossenen Position des Verschlussmittels (10) gegen den am Ende des Filterelements (16.1; 16.2) vorhandenen Überkopfdeckel (21) angelegt ist.

2. Verwendung des Filters nach Anspruch 1 für die Filtration von Schmieröl.

## Revendications

1. Filtre comprenant :
- un corps cylindrique (1) et un canal d'entrée pour le liquide à filtrer menant dans le corps et un canal de sortie pour le liquide filtré menant hors du corps, dans lequel le corps (1) inclut un capuchon amovible, fermant le corps (3),
- un tube central (4), à travers lequel le liquide filtré est déchargé,
- dans le corps (1), un élément filtrant principal cylindrique de manière coaxiale (17) alimenté avec le liquide à filtrer depuis le canal d'entrée, le liquide à filtrer étant reçu à l'extérieur de l'élément filtrant principal et un élément filtrant de réserve cylindrique (19.1 ; 19.2), qui est plus court que l'élément filtrant principal, est positionné à l'intérieur de l'élément filtrant principal et dont la résistance à la filtration n'est pas supérieure ou égale à celle de l'élément filtrant principal (17),
- une soupape de contournement incluant un système de fermeture actionné par ressort (10) et un ressort du système de fermeture (11), dans lequel :
- le système de fermeture actionné par ressort (10) présente
- une position fermée empêchant que le flux du liquide à filtrer ne contourne l'élément filtrant principal (17) et permettant l'écoulement de liquide à filtrer vers l'élément filtrant principal (17) et en outre à travers l'élément filtrant principal (17), et
- une position ouverte permettant au liquide à filtrer de contourner l'élément filtrant principal (17) à l'élément filtrant de réserve (19.1 ; 19.2) et en outre de s'écouler à travers l'élément filtrant de réserve (19.1 ; 19.2), et dans lequel :
- le ressort du système de fermeture (11) pousse le système de fermeture (10) vers la position fermée et qui laisse la place à l'ouverture du système de fermeture (10) quand la différence de pression à travers l'élément filtrant principal (17) dépasse une valeur donnée,
**caractérisé en ce que**
- le capuchon de fermeture de corps (3), lorsqu'il est fixé avec le corps (1), appuie le système de fermeture (10) contre le ressort du système de fermeture (11) par le biais de l'élément filtrant principal (17) ou de l'élément filtrant de réserve (19.1 ; 19.2),
- l'élément filtrant principal (17) et l'élément filtrant de réserve (19.1 ; 19.2) sont intégrés afin de former un élément filtrant unique (16.1 ; 16.2) et interconnectés à une extrémité correspondante,
- l'élément filtrant (16.1 ; 16.2) comprend un couvercle supérieur (21) à son extrémité,
- le filtre comprend en outre une tige centrale (9) fixée au tube central (4), dans lequel le capuchon amovible (3) est fixé à la tige (9) avec une cheville de fixation (12) entre la tige (9) et le capuchon amovible (3),
- le ressort du système de fermeture (11) est un ressort hélicoïdal installé autour de la tige (9), et
- le système de fermeture (10) est un piston en forme de godet, dont l'intérieur est scellé contre la tige centrale (9) ou la cheville de fixation (12), le piston en forme de godet présentant une bordure supérieure placée contre le couvercle supérieur (21) présent à l'extrémité de l'élément filtrant (16.1 ; 16.2) dans la position fermée du système de fermeture (10).

2. Utilisation du filtre selon la revendication 1, pour la filtration d'huile de lubrification.
